(19) Europäisches Patentamt

European Patent Office

Office européen des brevets

(11) **EP 1 622 277 A1**

(12) **EUROPEAN PATENT APPLICATION**

(43) Date of publication:
**01.02.2006 Bulletin 2006/05**

(51) Int Cl.:
***H03M 13/41*** *(2006.01)*

(21) Application number: **05291511.3**

(22) Date of filing: **12.07.2005**

(84) Designated Contracting States:
**AT BE BG CH CY CZ DE DK EE ES FI FR GB GR HU IE IS IT LI LT LU LV MC NL PL PT RO SE SI SK TR**
Designated Extension States:
**AL BA HR MK YU**

(30) Priority: **28.07.2004 EP 04291933**

(71) Applicant: **ALCATEL**
**75008 Paris (FR)**

(72) Inventors:
• **Buchali, Fred**
**71336 Waiblingen (DE)**
• **Bülow, Henning**
**70806 Kornwestheim (DE)**

(74) Representative: **Kohler Schmid Möbus**
**Patentanwälte**
**Ruppmannstrasse 27**
**70565 Stuttgart (DE)**

(54) **Enhanced Viterbi equalizer and algorithm**

(57)    A device (1) for receiving a distorted signal, in particular an optical signal converted by an opto/electrical converter (2), comprises an electrical low-pass filter (3), an analog/digital converter (4), and a Viterbi equalizer (5). The bandwidth of the electrical low-pass filter (3) and the sampling rate of the device (1) are set such that a noise sample at an actual sampling time is correlated to one or more noise samples at one or more adjacent sampling times and the Viterbi equalizer (5) comprises a means (5a) for mitigating inter-symbol interference by taking into account correlation of the different noise samples at the actual sampling time and one or more adjacent sampling times.

**Fig. 1**

**Description**

Background of the invention

The invention relates to a device for receiving a distorted signal, in particular an optical signal converted by an opto/electrical converter.

Digital optical signals traversing an optical fiber are subject to distortion and noise which may produce bit errors at the receiver side. At higher transmission rates, error correction is performed at the receiver side to reduce the error rate of distorted signals. Electronic dispersion compensation (equalization) has been identified to have the potential to increase margins at lower costs than optical compensation. A known method of error correction, the Maximum Likelihood Sequence Estimation (MLSE) reducing errors caused by inter-symbol interference (ISI), uses a Viterbi equalizer (VE). At the output of the Viterbi equalizer an equalized bit sequence which has the maximum a posteriori probability to coincide with the undisturbed bit sequence is provided. The Viterbi equalizer is implemented as a program in a processor or as a digital signal processing realization in an ASIC.

**Object of the invention**

It is the object of the invention to provide a device of the above-mentioned kind with an enhanced residual optical signal to noise ratio (OSNR).

**Brief description of the invention**

This object is achieved by a device of the above-mentioned kind comprising an electrical low-pass filter, an analog/digital converter, and a Viterbi equalizer. The bandwidth of the electrical low-pass filter and the sampling rate of the device are set such that a noise sample at an actual sampling time is correlated to one or more noise samples at one or more adjacent sampling times and the Viterbi equalizer comprises a means for mitigating inter-symbol interference by taking into account correlation of the different noise samples at the actual sampling time and one or more adjacent sampling times.

The distorted optical signal is first converted into an electrical signal by an optical/electrical converter such as a photodiode. For noise reduction, the signal then passes through an electrical low pass filter. The sampled signal is then introduced as an analog-to-digital converted number into the Viterbi equalizer.

The invention is based on the realization that when the bandwidth of the low-pass filter is reduced for noise signal reduction, inter-symbol interference increases as noise samples at different sampling times are no more uncorrelated. As the standard Viterbi equalizer is optimum for uncorrelated noise samples, the standard Viterbi equalizer has to be modified in order to take this effect into account.

In a preferred embodiment of the invention, the means for reducing inter-symbol interference determines the noise sample at the actual sampling time as a function of deviations of detected sampled values from expected values at the actual sampling time and one or more adjacent sampling times. In the standard Viterbi equalizer, the noise sample at the actual sampling time is determined as a function of the deviation of the detected sample value from the expected value at the actual sampling time. In the present modified Viterbi equalizer, deviations at adjacent sampling times are also taken into account.

In a further preferred embodiment of the invention, the noise sample at the actual sampling time is determined as a sum of the deviations at present and adjacent sampling times weighted with linear coefficients. A linear relation between the noise sample and the deviations can be easily reversed, such that deviations can be expressed in terms of the noise samples.

In a further embodiment, the linear coefficients given by channel and low pass characteristics are determined as a solution of a set of linear equations. The noise of adjacent sampling times can then be subtracted. The linear coefficients may be determined in an external processor (not time critical) and then loaded into the Viterbi equalizer.

In another embodiment, the sampling rate of the device is an integer multiple of a bit rate of the distorted signal. For a bit rate of the distorted signal of 10 Gbit/s, the sampling rate may be set to e.g. 10 GHz, 20 GHz, or 30 GHz.

The invention is also realized in a method for operating a Viterbi equalizer, in particular of the device of the above-mentioned kind in which a Viterbi algorithm is implemented by the Viterbi equalizer and the cost function of the Viterbi algorithm is determined by a probability density function depending on deviations of detected sampled values from expected values at the actual sampling time and one or more adjacent sampling times or by a probability density function depending on the noise signals at the actual sampling time and one or more adjacent sampling times.

The cost function of the standard Viterbi algorithm does not take into account correlation of noise at different sampling times, such that a noise reduction using a low-pass filter results in an increased inter-symbol interference. Taking noise correlation into account by modifying the cost function, the Viterbi algorithm mitigates inter-symbol interference and therefore allows the use of very small bandwidths of the low-pass filter, resulting in increased receiver performance.

In a preferred embodiment, the step size of the Viterbi algorithm is at least two bits. Normally, paths of a trellis diagram of the Viterbi algorithm are calculated with a step size of one bit. In order to simplify calculations, the step size can be set to two or more bits. The path length depends on the correlation length. Joint and/or conditional probabilities can be taken into account.

In a further preferred embodiment, the cost function is stored in a n-dimensional look-up table. In the modified Viterbi algorithm, values in the look-up table for one bit combination depend on bit combinations of adjacent sampling times. The look-up table is therefore n-dimensional, where n is the number of bit combinations taken into account.

Further advantages may be extracted from the description and the enclosed drawings. The features mentioned above and below may be used in accordance with the invention either individually or collectively in any combination. The embodiments mentioned are not to be understood as an exhaustive enumeration but rather have an exemplary character for the

description of the invention.

Drawings

The invention is shown in the drawings, wherein:

Fig. 1 shows a schematic diagram of an embodiment of the device according to the invention,
Fig. 2 shows a diagram of a sampled bit broadened over two bit slots by adjacent bits,
Fig. 3 shows a diagram of a distorted optical signal and a noise sample at an actual sampling time,
Fig. 4 shows the diagram of Fig. 3 with an additional noise sample at a subsequent sampling time,
Fig. 5 shows the diagram of Fig 4 with an additional noise sample at a previous sampling time,
Fig. 6 shows a trellis diagram of a Viterbi algorithm with two paths.

Description of preferred embodiments

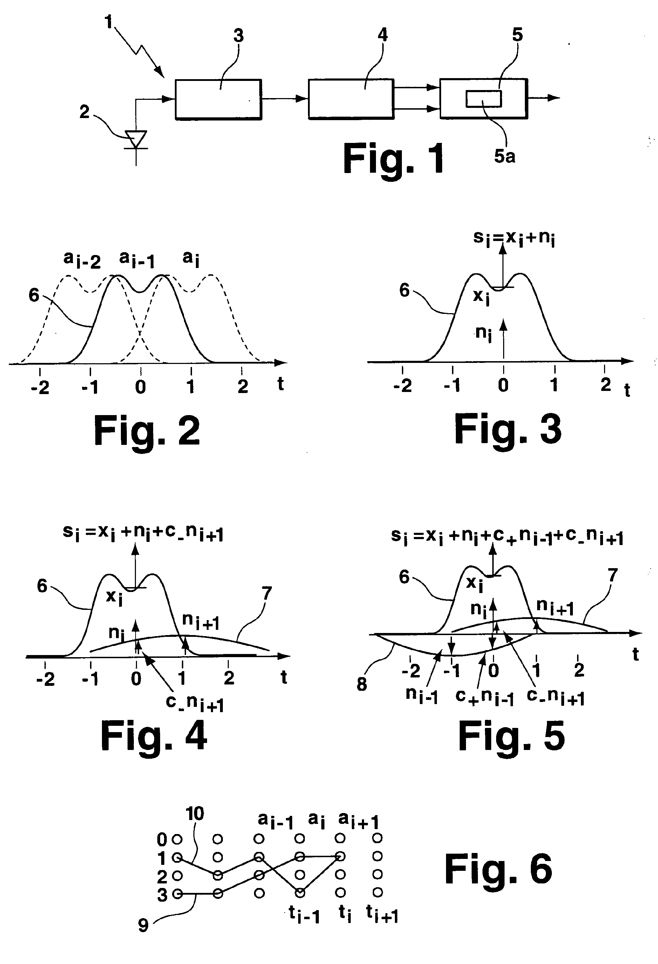

**Fig. 1** shows an optical receiver **1** comprising an optical/electrical converter **2**, implemented as a photodiode, an electrical low-pass filter **3**, an analog/digital converter **4** and a Viterbi equalizer **5** arranged in series.

The optical receiver 1 is designed for reception of a distorted optical signal transferring a digital bit sequence. The Viterbi equalizer 5 of the optical receiver 1 is capable of correcting strong inter-symbol interference as shown in **Fig. 2**. A first data signal **6** corresponding to a sampled bit $a_{i-1}$ at a sampling time $t_{i-1}$ is broadened over two bits $\mathbf{a_{i-2}}$, $\mathbf{a_i}$ at adjacent sampling times $t_{i-2}$, $t_i$.

In the standard Viterbi algorithm all the bits which determine the signal amplitude at a decision time are grouped into state bits and a branch bit. In the present case, the state bits define four possible states 0 through 3 which are characterized by four possible two-bit combinations $\{a_{i-1}, a_{i-2}\}$: state 0 is defined by the combination $\{0,0\}$, state 1 by $\{0,1\}$, state 2 by $\{1,0\}$ and state 3 by $\{1,1\}$.

At a given sampling time $t_i$ the state bits are $a_{i-1}$, $\mathbf{a_{i-2}}$ and the branch bit is $a_i$. At a following sampling time $t_{i+1}$, the state bits are $a_i$, $a_{i-1}$ and the branch bit is $a_{i+1}$. The branch bit $a_i$ defines the transition from the state defined by bits $a_{i-1}$, $a_{i-2}$ at sampling time $t_i$ to the state defined by the state bits $a_i$, $a_{i-1}$ at time $t_{i+1}$. As the first bit of the state at time $t_i$ coincides with the second bit at time $t_{i+1}$, not all of the transitions from the state at time $t_i$ to the state at time $t_{i+1}$ are allowed. As an example, the transition from state 1 defined by bits $\{0,1\}$ at time $t_i$ to state 0 defined by bits $\{0,0\}$ a subsequent sampling time $t_{i+1}$ is impossible.

For each combination of bits (state/branch) at a given time $t_i$ the standard Viterbi algorithm awaits an expected value of the signal: $\mathbf{X}_i$. However, the optical signal is corrupted by noise $n_i$. Therefore, a detected signal $\mathbf{S}_i$ deviates from the expected value $X_i$, i.e. $S_i = X_i + n_i$ at sampling time $t_i$. This relation is shown **Fig. 3** in a diagram where the sampling time $t_i$ is set at the origin of the timeline.

The noise sample $n_i$ at time $t_i$ is the maximum value of a Gaussian noise signal with standard deviation $\sigma$. The values of X and $\sigma$ for the different bit combinations (state, branch) have the function of a channel model required for equalization of the channel induced distortion by the Viterbi algorithm.

The Viterbi algorithm reformulates the problem of finding an original transmitted bit sequence of a distorted signal by determining the shortest path in a so-called trellis diagram shown in **Fig. 6**. In the trellis diagram each row represents one of the four states 0 through 3 at different sampling times. Each column represents the four states at a given sampling time. At each sampling time, a decision whether the branch bit is 0 or 1 has to be made. This decision is based upon the choice of the shortest path in the trellis diagram. A path in the trellis diagram is defined by the transitions between subsequent sampling times. Each transition yields one addend of the cost function.

The shortest path in the trellis diagram is the one that minimizes the cost function of the Viterbi algorithm. The cost function for a path is dependent on deviations of the detected sample S, from the expected value X (the actual noise value n) and the standard deviation σ for this expected value X in the following way:

$$Cost(path) = \sum_i \frac{(S_i - X_i)^2}{\sigma_i^2} = \sum_i \frac{n_i^2}{\sigma_i^2}$$

The index i covers all sampling times up to the actual sampling time. In the trellis diagram of Fig. 6, two possible paths **9**, **10** are shown, of which only one minimizes the cost function. From the above equation it is obvious that each addend of the cost function corresponds to a given sampling time in the standard Viterbi algorithm.

In the present case, the bandwidth of the electrical low-pass filter 3 is lowered for noise reduction. As a result, noise distributions are narrowed (lower σ), but a correlation of noise samples of adjacent sampling times increases, as is shown in **Fig. 4** and **Fig. 5**. The noise correlation has to be taken into account by a modification of the standard Viterbi algorithm, as described below.

Modified Viterbi algorithm

In Fig. **4**, a noise sample $n_{i+1}$ at time $t_{i+1}$ resulting from a succeeding bit generates a crosstalk contribution c- $n_{i+1}$ at the sampling time $t_i$ due to the broad (in time) impulse response of the low pass filter. This crosstalk noise adds to the actual noise $n_i$ at the sampling time $t_i$. Hence the sampled signal amplitude $S_i$ is not $X_i + n_i$ (as stored in the channel model of the standard Viterbi equalizer) but $S_i = X_i + n_i + c- n_{i+1}$.

In a similar way, the noise from the noise sample $n_{i-1}$ at sampling time $t_{i-1}$ introduces cross talk and influences the actual sample $X_i$ due to the low-pass filter induced inter-symbol interference, as shown in Fig. 5. In this case, the sampled deviation $S_i - X_i$ depends on the noise at sampling time $n_i$, but also on the noise of the two adjacent bits (correlation of the noise): $S_i - X_i = c+ n_{i-1} + n_i + c- n_{i+1}$. The coefficients c- and c+ are determined by the characteristics of the data transmission channel. If they are not known, it is possible to make an estimation with further check and optimization of the estimation.

For taking the correlated noise contributions into account, the goal is to calculate the $n_i$ before correlation. Then the noise contribution $n_i$ in the cost function of the modified Viterbi algorithm is taken to be dependent on a linear combination of deviations $n_i = \sum_k b_k (S-X)_{i-k}$ at different sampling times k. Then the coefficients $b_k$ can be calculated from the c-coefficients (inverse matrix) or adapted separately. They can be loaded into the Viterbi equalizer core from an external processor where they are calculated (not time critical) by solving $(S-X)_i = S_i - X_i = c+ n_{i-1} + n_i + c- n_{i+1}$, which is simultaneously valid for all i. Of course, noise samples of more than two adjacent sampling times such as $t_{n-2}$, $t_{n-3}$, $t_{i+2}$, $t_{i+3}$ may also be taken into account.

Numerical simulations show that for moderate distortions the residual penalty is less than the value of either a single FFE or a single Viterbi equalizer. For example, with a Viterbi equalizer comprising 4 states, the OSNR penalty (at 75ps DGD) can be reduced from 2.5 dB to below 2 dB. For high distortions (which might be out of the envisaged operation range of optical receivers) the penalty of the Viterbi equalizer is in a wide range below 3 dB which allows seamless operation over the whole range, from low to high distortions.

**Claims**

1. Device (1) for receiving a distorted signal, in particular an optical signal converted by an opto/electrical converter (2), comprising an electrical low-pass filter (3), an analog/digital converter (4), and a Viterbi equalizer (5), wherein

   the bandwidth of the electrical low-pass filter (3) and the sampling rate of the device (1) are set such that to a noise sample ($n_i$) at an actual sampling time ($t_i$) crosstalk noise (c- $n_{i+1}$, c+ $n_{i-1}$) of one or more noise samples ($n_{i-1}$, $n_{i+1}$) at one or more adjacent sampling times ($t_{i-1}$, $t_{i+1}$) is added and the Viterbi equalizer (5) comprises a means (5a) for mitigating inter-symbol interference by taking into account the crosstalk noise (c- $n_{i+1}$, c+ $n_{i-1}$).

2. Device according to claim 1, **characterized in that** the means (5a) for reducing inter-symbol interference determines the noise sample ($n_i$) at the actual sampling time ($t_i$) as a function of deviations of detected sampled values ($S_i$) from expected values ($X_i$) at the actual sampling time ($t_i$) and one or more adjacent sampling times ($t_{i-1}$, $t_{i+1}$).

3. Device according to claim 2, **characterized in that** the noise sample ($n_i$) at the actual sampling time ($t_i$) is determined as a sum of the deviations of detected sampled values ($S_i$) from expected values ($X_i$) weighted with linear coefficients.

4. Device according to claim 3, **characterized in that** the coefficients are determined as solution of a set of linear equations.

5. Device according to claim 1, **characterized in that** the sampling rate of the device (1) is an integer multiple of a bit rate of the distorted signal.

6. Method for operating a Viterbi equalizer (5), in particular of a device (1) according to claim 1,
   **characterized by** the steps of:
   implementing a Viterbi algorithm in the Viterbi equalizer (5), determining the cost function of the Viterbi algorithm by a probability density function depending on deviations of detected sampled values ($S_i$) from expected values ($X_i$) at the actual sampling time ($t_i$) and one or more adjacent sampling times ($t_{i-1}$, $t_{i+1}$) or by a probability function depending on the noise samples ($n_{i-1}$, $n_i$, $n_{i+1}$) at the actual sampling time ($t_i$) and one or more adjacent sampling times ($t_{i-1}$, $t_{i+1}$).

7. Method according to claim 6, **characterized in that** the step size of the Viterbi algorithm is at least two bits.

8. Method according to claim 6, **characterized in that** the cost function is stored in a n-dimensinal look-up table.

**Fig. 1**

**Fig. 2**

$a_{i-2}$  $a_{i-1}$  $a_i$

$t$

**Fig. 3**

$s_i = x_i + n_i$

$x_i$

$n_i$

$t$

**Fig. 4**

$s_i = x_i + n_i + c_- n_{i+1}$

$x_i$

$n_i$  $n_{i+1}$

$c_- n_{i+1}$

$t$

**Fig. 5**

$s_i = x_i + n_i + c_+ n_{i-1} + c_- n_{i+1}$

$x_i$

$n_i$  $n_{i+1}$

$n_{i-1}$  $c_+ n_{i-1}$  $c_- n_{i+1}$

$t$

**Fig. 6**

$a_{i-1}$  $a_i$  $a_{i+1}$

0
1
2
3

$t_{i-1}$  $t_i$  $t_{i+1}$

**European Patent Office**

**EUROPEAN SEARCH REPORT**

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| A | A. KAVCIC AND J.M.F. MOURA: "The Viterbi Algorithm and Markov Noise Memory" IEEE TRANSACTIONS ON INFORMATION THEORY, vol. 46, no. 1, January 2000 (2000-01), pages 291-301, XP002307984 * page 291, column 1, line 1 - page 301, column 2, last line * ----- | 1,6 | H03M13/41 |
| A | K. VADESUVAN: "Detection of signals in correlated interference using a predictive VA" CCS 2002 - 8TH IEEE INTERNATIONAL CONFERENCE ON COMMUNICATIONS SYSTEMS, 25 November 2002 (2002-11-25), - 28 November 2002 (2002-11-28) pages 529-533, XP002307985 INGAPORE * page 529, column 1, line 1 - page 533, column 2, last line * ----- | 1,6 | |
| | | | TECHNICAL FIELDS SEARCHED (Int.Cl.7) H03M |

The present search report has been drawn up for all claims

| Place of search | Date of completion of the search | Examiner |
|---|---|---|
| The Hague | 5 October 2005 | Van Staveren, M |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

................................................................................

& : member of the same patent family, corresponding document

EPO FORM 1503 03.82 (P04C01)